# EUROPEAN PATENT APPLICATION

(11) **EP 1 168 216 A1**
(43) Date of publication of application: **02.01.2002**
(21) Application number: 01304554.7
(22) Date of filing: 23.05.2001
(51) Int. Cl.: G06F 17/60

(54) **Market evaluator method and system**

(30) Priority: 25.05.2000 GB 0012822
(71) Applicant: GE International Inc., London W6 8BX (GB)
(72) Inventor: McVeigh, James Taylor, Brighton, East Sussex BN22 6AW (GB)
(74) Representative: Goode, Ian Roy

(57) **Abstract**

Method of evaluating occupancy and cost efficiency of real estate, comprising entering size, total occupancy and rental cost information for a given property, as well as location information (1). Calculations are performed (2) to determine values of occupancy efficiency and cost efficiency (G, J). A point of comparison (G₀, H₀) is determined from a lookup table to provide the average values for occupancy efficiency and cost efficiency for a property in the location of the given property (3). There is then displayed a chart (4), which plots occupancy efficiency and cost efficiency against one another, the chart comprising four quadrants delineated by the lines parallel with the axes of the chart and which pass through the point of comparison (G₀, H₀). A point whose co-ordinates represent the calculated values (G, J) is plotted (5) on the chart to enable a rapid visual assessment of the given property versus the market to be made.

## Description

This invention relates to a method and system for evaluating a market by comparing selected parameters of a given commodity with those of an external market. The invention is particularly concerned with market evaluations for real estate.

In order to determine the suitability of a piece of real estate for a given purpose, it is desirable to compare, for example, rent per unit area and occupancy efficiency with those pertaining in the external market. Although this can be done by performing calculations given the relevant values for a subject property and the market, it would be desirable to have a readily available visual display showing the comparison immediately after entering the relevant data.

It is an object of the present invention to provide a method and system which provides such a visual comparison.

According to the present invention, there is provided a method of evaluating cost and occupancy efficiency of real estate, comprising entering into a computer system the size, rental costs and total occupancy information for a given property, as well as location information;
calculating values of cost efficiency and occupancy efficiency;
providing a point of comparison by determining from a lookup table the representative values for cost efficiency and occupancy efficiency for a property in the location of the given property; and
displaying on a chart, which plots cost efficiency and occupancy efficiency against one another, a point whose co-ordinates represent said calculated values, said chart comprising four quadrants delineated by the lines parallel with the axes of the chart and which pass through said point of comparison.

By arranging that the point of comparison lies substantially centrally in the displayed chart, the four quadrants can be made to represent a first area (lower left quadrant) in which both cost efficiency and occupancy efficiency are better than average, a second area (upper left quadrant) in which cost efficiency is worse than average although occupancy efficiency is better than average, a third area (lower right quadrant) in which occupancy efficiency is worse than average although cost efficiency is better than average, and a fourth area (upper right quadrant) in which both cost efficiency and occupancy efficiency are worse than average.

Thus the use of the invention enables a rapid visual comparison to be made to determine how a given property is performing, or would perform, against the market.

A method and system according to the invention will now be described, by way of example, with reference to the accompanying drawings, in which:
Fig. 1 is a diagram describing the steps taken in carrying out an embodiment of the invention; and
Fig. 2 is a screen display of a computer system programmed to implement an example of the invention.

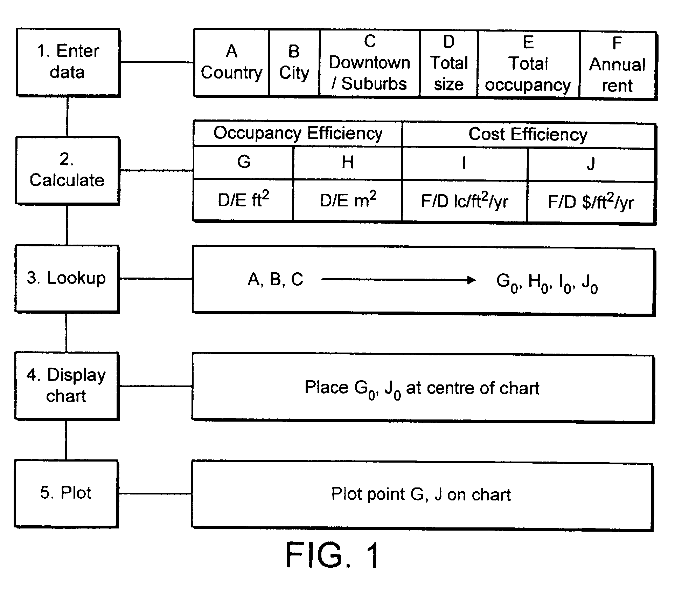

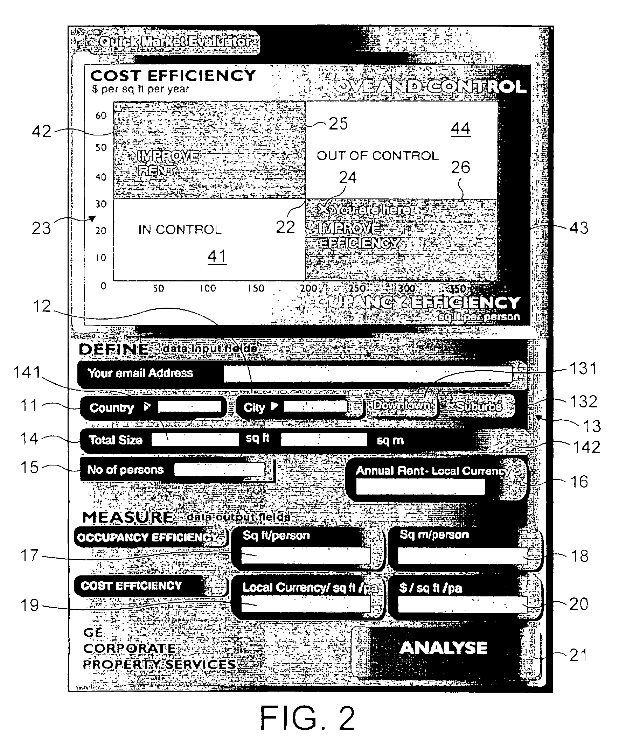

Referring to Fig. 1 and Fig. 2, a system in accordance with the invention is used for market evaluation of real estate. The user enters into a computer system the data (step 1) relevant to a particular property under consideration. To do this, in well-known fashion using for example a keyboard and mouse, the data is entered into windows 11-16 in a screen display as shown in Fig. 2. In windows 11 and 12, which are set up to contain drop-down menus in well-known fashion, the country (A) and city (B) in which the property is located are entered. Window 13 comprises two 'buttons' 131 and 132, where a selection (C) is made between 'downtown' and 'suburbs'. In window 14, the total size, i.e. the floor area (D) of the property is entered, either in square feet in window 141 or in square meters in window 142. Whichever unit is used, the conversion appears in the other window. So, if a size in square feet is entered into window 141, the conversion (divide by 10.76) appears in window 142, and vice versa. The total number of persons (E) in occupancy, or potentially occupying the property, is entered into window 15, and the annual rent (F) in local currency, is entered into the window 16. A further window, not shown, may be provided, for example next to window 16, to enable the rent to be entered in US dollars, in which case the value entered may be used without conversion in the cost efficiency calculations described below.

The computer is programmed to make the following calculations (Fig. 1, step 2). Occupancy efficiency (G) and (H) is calculated as G = D/E ft²/person and as H = G/10.76 m²/person. Cost efficiency (I) and (J) is calculated as I = F/D local currency/ft²/year and J = I x $/local currency (so J is in $/ft²/year). Occupancy efficiencies (G) and (H) are displayed in windows 17 and 18 respectively, and cost efficiencies (I) and (J) are displayed in windows 19 and 20 respectively.

Once all the data has been entered, on selecting the ANALYSE button 21 in the lower right hand corner of the screen, the display chart is adjusted by the software, with reference to a lookup table (Fig. 1, step 3), to place the average occupancy efficiency (G₀, H₀) and average cost efficiency (l₀, J₀) for the selected location at the centre 22 of the displayed chart 23 (Fig. 1, step 4).
This takes into account the country and city information (A, B) which has been entered, together with the downtown / suburb selection. As noted above, the calculated values of occupancy efficiency (G, H) and cost efficiency (I, J) for the selected property are also displayed in windows 17 - 20. At the same time, the point 24 is plotted (Fig. 1, step 5) on chart 23, labelled 'You are here', and shows the position of the selected property in relation to the average figures represented by the centre 22 of the chart.

The chart 23 is divided into four quadrants 41 - 44 by the 'average' lines 25, 26 for occupancy efficiency and cost efficiency respectively. In the example shown in Fig 2, the average occupancy efficiency for a selected location is 200 ft² per person, and the average cost efficiency is around US $30 per ft² per year.
Thus a property which is plotted in the first quadrant 41, labelled 'In Control', has both its occupancy efficiency and cost efficiency better than the average. A property in the second quadrant 42, labelled 'Improve rent' has an occupancy efficiency better than average, but a cost efficiency worse than average. In this context, when a good value property is being sought, the term 'improve rent' indicates that a rent reduction would be desirable. In the case of a lessor or potential lessor seeking to maximise rent, the chart would need to be redesigned appropriately. A property in the third quadrant 43 of the chart of Fig. 2, labelled 'Improve efficiency' has an occupancy efficiency worse than average, but a cost efficiency better than average. Finally, a property in the fourth quadrant 44, labelled 'Out of control' has both occupancy and cost efficiencies worse than average. In the present example, the selected property, indicated by plotted point 24, falls in this fourth quadrant.

Although the term 'average' has been used in the foregoing description, it is to be understood that this value is a 'representative' value, and could alternatively be a median value, a mean value, or, for certain applications, some other value such as an upper or lower quartile value.

Furthermore, in addition to the use of basic rents, the system could be adapted to accommodate additional factors such as service charges, costs of facilities, and local taxes. These factors could be taken into account by the use of additional windows on the display, and the relevant comparisons taken from the modified lookup tables, using well know techniques such as drop-down menus to enable the appropriate selections to be made.

The displayed chart thus provides an instant and easily comprehended visual assessment of the most important factors in comparing a property with the market.

## Claims

1. Method of evaluating cost and occupancy efficiency of real estate,
comprising entering into a computer system the size, rental costs and total occupancy information for a given property, as well as location information; calculating values of cost efficiency and occupancy efficiency;
providing a point of comparison by determining from a lookup table the representative values for cost efficiency and occupancy efficiency for a property in the location of the given property; and
displaying on a chart, which plots cost efficiency and occupancy efficiency against one another, a point whose co-ordinates represent said calculated values, said chart comprising four quadrants delineated by the lines parallel with the axes of the chart and which pass through said point of comparison.

2. The method of claim 1 wherein the cost efficiency is calculated in terms of rental cost per unit area per unit time, and occupancy efficiency is calculated in terms of unit area per occupant.

3. The method of claim 1 wherein said point of comparison is placed substantially centrally in said displayed chart, thereby providing four quadrants of substantially equal areas.

4. The method of claim 2 wherein said quadrants represent a first area where both the cost efficiency and occupancy efficiency are better than the values represented by the point of comparison, second and third areas where either the cost efficiency or the occupancy efficiency are worse than the averages represented by the point of comparison, and a fourth area where both the cost efficiency and the occupancy efficiency are worse than the averages represented by the point of comparison.

5. The method of any one of claims 1 to 4 wherein said representative values are average values.

6. A computer system for evaluating cost and occupancy efficiency of real estate, comprising means for receiving and displaying information comprising
size, rental costs and total occupancy information for a given property, as well as location information;
means for calculating values of cost efficiency and occupancy efficiency; means for providing a point of comparison by determining from a lookup table the representative values for cost efficiency and occupancy efficiency for a property in the location of the given property; and
means for displaying on a chart, which plots cost efficiency and occupancy efficiency against one another, a point whose co-ordinates represent said calculated values, said chart comprising four quadrants delineated by the lines parallel with the axes of the chart and which pass through said point of comparison.
